# EUROPEAN PATENT SPECIFICATION

(11) **EP 3 054 665 B1**
(45) Date of publication and mention of the grant of the patent: **05.08.2020**
(21) Application number: 16154069.5
(22) Date of filing: 03.02.2016
(51) Int. Cl.: H04N 5/225, G03B 17/14, H04N 5/232, H04N 5/33, G03B 17/56

(54) **SHORT WAVE INFRARED CAMERA**
KURZWELLEN-INFRAROTKAMERA
CAMÉRA INFRAROUGE À ONDES COURTES

(30) Priority: 03.02.2015 US 201514612915
(43) Date of publication of application: 10.08.2016
(73) Proprietor: Hamilton Sundstrand Corporation, Charlotte, NC 28217 (US)
(72) Inventor: HANSEN, Marc, Hamilton, NY 08619 (US); GIRDHARI, Adityanand, Franklin Park, NJ 08823 (US)
(74) Representative: Dehns

(56) References cited:
- US-A1- 2007 140 686
- US-A1- 2014 152 777
- Anonymous: "Announcing The Sensors Unlimited Warrior C2S", Photonics online, 15 May 2014 (2014-05-15), XP055278808, Retrieved from the Internet: URL:http://www.photonicsonline.com/doc/ann ouncing-warrior-c-s-0001 [retrieved on 2016-06-08]
- Anonymous: "Astroscope Night Vision for Canon EOS dSLR Cameras", , 31 December 2013 (2013-12-31), XP055279151, Retrieved from the Internet: URL:http://sofradir-ec.com/DbImages/SofEC- NV_CanonSLR-v14.pdf [retrieved on 2016-06-09]
- Anonymous: "Electrophysics Resource Center: Night Vision Tips on Creating Awesome Night Vision Digital SLR Photos", , 31 December 2008 (2008-12-31), XP055278959, Retrieved from the Internet: URL:http://www.evidencephotographers.com/m embers/Tips_Awesome_SLRPhotos.pdf [retrieved on 2016-06-08]

## Description

### BACKGROUND

Short wave infrared cameras are useful to, among other things, identify objects through atmospheric obscurants. Many vision technologies Have difficulty seeing images clearly in low light. Short wave infrared cameras can clarify images in low light. That is, images captured with short wave infrared cameras have reduced degradation associated with bright lights and flashes verses many other types of image capturing technologies.

Thermal cameras can also clarify images in low light conditions, but thermal cameras cannot image through glass. Short wave infrared cameras can image through glass.

Some known standard cameras are converted to capture short wave infrared images by attaching a camera body directly to one end of the short wave infrared portion and a camera lens directly to an opposing end of the short wave infrared portion. Such systems are not conducive to swapping out a short wave infrared portion when short wave infrared imaging is no longer desired.

Cradles have been developed that accommodate camera modules, but these known cradles cannot accommodate short wave infrared modules.

Anonymous: "Announcing The Sensors Unlimited Warrior C2S", Photonics online, 15 May 2014 (2014-05-15) and Anonymous: "Astroscope Night Vision for Canon EOS dSLR Cameras", 31 December 2013 (2013-12-31) relate to camera assemblies.

### SUMMARY

A camera assembly according to an exemplary aspect of the present disclosure includes, among other things, a camera body, a camera lens, a cradle that communicates signals between the camera body and the camera lens, and a short wave infrared sensor module selectively received within the cradle.

In a further non-limiting embodiment of the foregoing assembly, the assembly includes a display to display an image received by the short wave infrared sensor module.

In a further non-limiting embodiment of any of the foregoing assemblies, the camera body comprises the display.

In a further non-limiting embodiment of any of the foregoing assemblies, the display is a first display, and the short wave infrared sensor module comprises a second display to display an image received by the short wave infrared sensor module.

In a further non-limiting embodiment of any of the foregoing assemblies, the assembly includes a relay optic within the short wave infrared sensor module.

In a further non-limiting embodiment of any of the foregoing assemblies, the cradle selectively receives other modules.

In a further non-limiting embodiment of any of the foregoing assemblies, the assembly includes an optical relay within the short wave infrared sensor module. The optical relay magnifies an image captured by the short wave infrared sensor module over a fixed distance between an organic light emitting diode display of the camera body and a sensor of the camera body.

In a further non-limiting embodiment of any of the foregoing assemblies, the short wave infrared sensor module communicates with camera body and the camera lens through the cradle.

In a further non-limiting embodiment of any of the foregoing assemblies, the camera body and the camera lens are commercial off-the-shelf components.

A method of short wave infrared sensor module imaging according to an exemplary aspect of the present disclosure includes, among other things, communicating signals from a camera body through a cradle to control a camera lens, and selectively receiving a short wave infrared sensor module within the cradle.

In a further non-limiting embodiment of the foregoing method, the method includes displaying a short wave infrared sensor image on the short wave infrared sensor module.

In a further non-limiting embodiment of any of the foregoing methods, the method includes displaying an image from the short wave infrared sensor module on the camera body.

In a further non-limiting embodiment of any of the foregoing methods, the method includes selectively replacing the short wave infrared sensor module within the cradle with another type of imaging module.

In a further non-limiting embodiment of any of the foregoing methods, the camera body and camera lens are commercial off-the-shelf components.

### DESCRIPTION OF THE FIGURES

The various features and advantages of the disclosed examples will become apparent to those skilled in the art from the detailed description. The figures that accompany the detailed description can be briefly described as follows:
Figure 1 shows a highly schematic view of an example camera assembly.
Figure 2 shows a perspective view of another camera assembly.
Figure 3 shows a cradle of the camera assembly of Figure 2.
Figure 4 shows a short wave infrared sensor module from the camera assembly of Figure 2.

### DETAILED DESCRIPTION

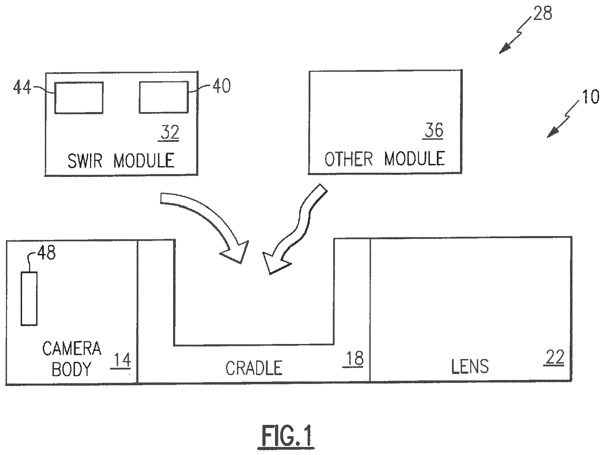

Referring to Figure 1, an example camera assembly 10 includes a camera body 14, a cradle 18, and a camera lens 22. The camera body 14 controls the camera lens 22 through the cradle 18. The camera body 14 may adjust the camera lens 22 to bring objects into focus, for example. Signals thus communicate between the camera body 14 and the camera lens 22 through the cradle 18.

The cradle 18 selectively receives one of a plurality of imaging modules 28. At least one of the modules is a short wave infrared sensor ("SWIR") module 32. In contrast to the SWIR module 32, the module 36 is not a short wave infrared sensor module. Instead, the SWIR module 32 is another type of imaging module. For example, the module 36 may be a module comprising intensifier tubes or a module comprising a complementary metal oxide silicon sensor.

SWIR images are generally obtained from wavelengths within the infrared band that are from 1.4 to 3 micrometers. Positioning the SWIR module 32 within the cradle 18 converts the camera assembly 10 to a SWIR imager that is capable of capturing SWIR images.

When the SWIR module 32 is installed within the cradle 18, the SWIR module 32 receives SWIR wavelengths through the camera lens 22. The wavelengths land on a focal point of a sensor within the SWIR module 32. Notably, a first portion of the cradle 18 is positioned axially between the camera body 14 and the SWIR module 32, and a second portion of the cradle 18 is positioned axially between the SWIR module 32 and the camera lens 22.

The example SWIR module 32 displays an image on a visual display 40 within the SWIR module 32. The image is based on the wavelengths sensed by the sensor within the SWIR module 32.

The SWIR module 32 further includes a relay optic 44 that sends a signal through the cradle 18 to the camera body 14 to enable the camera body 14 to reimage the wavelengths sensed by the sensor onto a sensor of the camera body 14. The camera body 14 may include a display 48 to provide a visual representation of an image based on the reimaged wavelengths from the sensor of the camera body 14.

The SWIR module 32 can include an eyepiece to allow for direct viewing of the SWIR imagery. The SWIR module 32 can further include an output to send analog video of the SWIR imagery that a user can then view or record.

The modularity of the camera assembly 10 provides the camera body 14 with the ability to obtain SWIR imagery via relatively few connections.

When obtaining SWIR imagery is no longer desired, the SWIR module 32 can be removed from the cradle 18 and replaced with the module 36. Disconnecting the camera body 14 from the cradle 58 is not required when swapping the SWIR module 32 for the module 36. Disconnecting the camera lens 22 from the cradle 58 is not required when swapping the SWIR module 32 for the module 36.

When converted to a SWIR imager, the camera assembly 10 has an enhanced ability to view images through haze, smoke, and dust. Military and security operators may utilize SWIR imaging during intelligence, surveillance, and reconnaissance activities.

When converted to a SWIR imager, the camera assembly 10 can recognize SWIR markers and beacons, as well as provide an operator of the camera assembly 10 with enhanced battlefield laser awareness.

When converted to a SWIR imager, the camera assembly can obtain imagery through glass and images are not substantially influenced by lights and flashes.

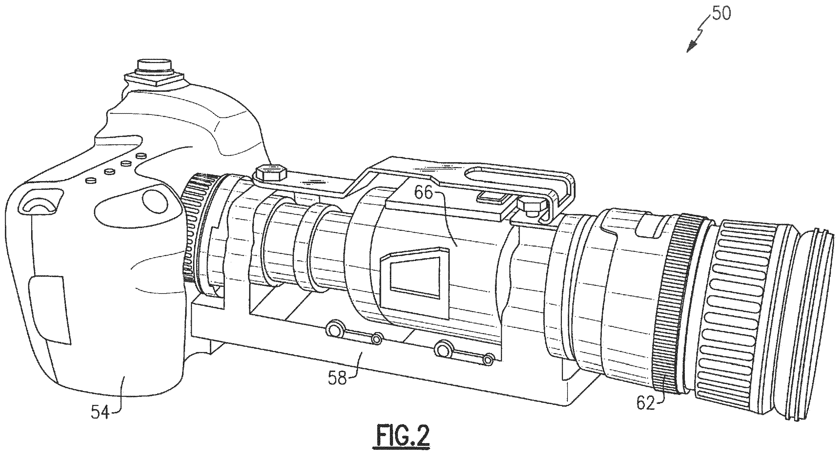

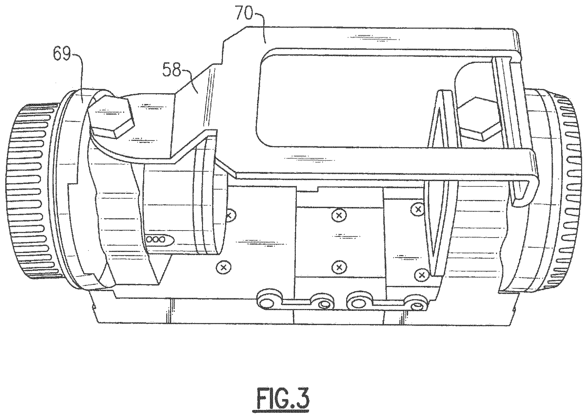

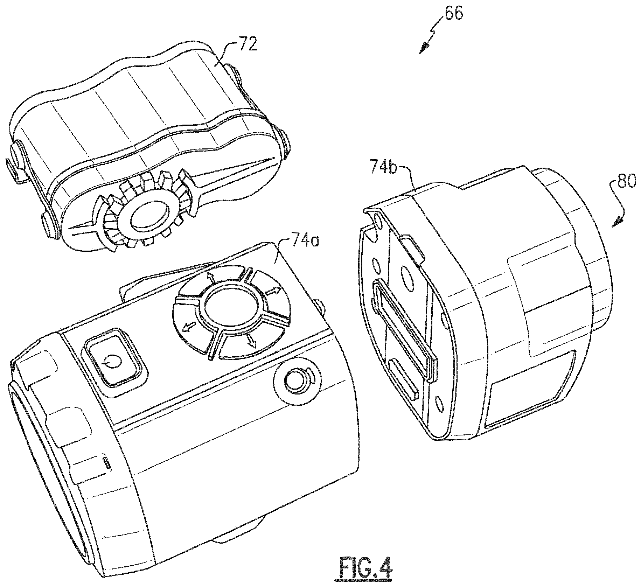

Referring to Figures 2 to 4, another example camera assembly 50 includes a camera body 54, a cradle 58, and a camera lens 62. The camera body 54 and the camera lens 62 are commercial off-the-shelf components. In one example, the camera body 14 is a Canon 5D camera.

A SWIR module 66 is selectively received within the cradle 58. The cradle 58 may include a lid 70 that is secured to other portions of the cradle 58 to secure the SWIR module 66 within the cradle 58.

The SWIR module 66 connects to the side of the cradle 58 interfacing with the camera lens 62 via a custom bayonet mount. The SWIR module 66 slides into the cradle 58 and is rotated a quarter turn to "click" the SWIR module 66 into an installed position within the cradle 58.

The SWIR module 66 is supported within the cradle 58 near the camera body 54 by a relay optic barrel 69 that holds the relay optic. The barrel 69 presses into a back of the SWIR module 66 to hold the SWIR module 66

The example SWIR module 66 can image light wavelengths from 0.9 to 1.7 micrometers, and thus can image light wavelengths below the standard short wave infrared range.

The example SWIR module 66 includes a battery pack 72 and a main body portion having a first section 74a and a second section 74b. The first section 74a and the second section 74b are axially aligned when received within the cradle 58. The battery pack 72 is secured to a radially outer surface of the first section 74a. The first section 74a houses a SWIR sensor, and the second section 74b houses a display. An eyepiece (not shown) can connect to an end 80 to allow for direct viewing of the SWIR imagery on the display within the second section 74b.

In some examples, the SWIR module 66 can be used as a stand-alone SWIR viewer. That is, when the SWIR module 66 is outside the cradle 58, SWIR imagery can be viewed on the display 80 of the SWIR module 66 without using the camera body 54 or the camera lens 62. The eyepiece would replace the camera body 54, as well as part of the cradle assembly 58 that would typically hold the relay optic and adapt the cradle assembly 58 to the camera body 54. When the camera body 54 is removed from the cradle assembly 58 and the camera lens 62 still attached, the eyepiece can be attached to the end 80.

The SWIR module 66 can include an optical relay that magnifies an image captured by the SWIR module 66 over a fixed distance between an organic light emitting diode display of the camera body 54 and a sensor of the camera body 54.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A camera assembly (10) comprising:
a camera body (14);
a camera lens (22);
a cradle (18) that communicates signals between the camera body (14) and the camera lens (22), wherein the cradle (18) includes a bayonet mount to selectively receive modules;
a short wave infrared sensor module (32) selectively received within the cradle (18), and
wherein the cradle (18) includes a first portion (74a) positioned axially between the camera body and the short wave infrared sensor module when the short wave infrared sensor module is received within the cradle, and a second portion (74b) positioned axially between the short wave infrared sensor module and the camera lens when the short wave infrared sensor module is received within the cradle, and wherein the cradle (18) includes a lid (70) that is secured to the first portion (74a) and the second portion (74b) to secure the short wave infrared sensor module (32) within the cradle (18).

2. The camera assembly (10) of claim 1, further comprising a display (40) to display an image received by the short wave infrared sensor module.

3. The camera assembly (10) of claim 2, wherein the camera body (14) comprises the display (48).

4. The camera assembly (10) of claim 3, wherein the display (48) is a first display, and the short wave infrared sensor module comprises a second display (40) to display an image received by the short wave infrared sensor module (32).

5. The camera assembly (10) of claims 1-4, further comprising a relay optic (44) within the short wave infrared sensor module.

6. The camera assembly of claims 1-5, wherein the short wave infrared sensor module (32) communicates with camera body (14) and the camera lens (22) through the cradle (18).

7. The camera assembly of claims 1-6, wherein the camera body (14) and the camera lens (22) are commercial off-the-shelf components.

8. A method of short wave infrared sensor module imaging by a camera assembly according to claims 1 to 7, the method comprising:
communicating signals from the camera body (14) through the cradle (18) to control the camera lens (22); selectively receiving the short wave infrared sensor module (32) within the cradle (18) and securing the lid (70) to the first portion (74a) and to the second portion (74b) within the cradle (18);
selectively replacing the short wave infrared sensor module (32) within the cradle (18) with another type of imaging module.

9. The method of claim 8, further comprising displaying a short wave infrared sensor image on the short wave infrared sensor module (32).

10. The method of claims 8 or 9, further comprising displaying an image from the short wave infrared sensor module (32) on the camera body (14).

11. The method of claims 8-10, wherein the camera body (14) and camera lens (22) are commercial off-the-shelf components.

## Patentansprüche

1. Kamerabaugruppe (10), umfassend:
einen Kamerakörper (14);
eine Kameralinse (22);
eine Aufnahmevorrichtung (18), die Signale zwischen dem Kamerakörper (14) und der Kameralinse (22) kommuniziert, wobei die Aufnahmevorrichtung (18) einen Bajonettabschluss beinhaltet, um selektiv Module aufzunehmen;
ein Kurzwellen-Infrarotsensormodul (32), das selektiv innerhalb der Aufnahmevorrichtung (18) aufgenommen wird, und
wobei die Aufnahmevorrichtung (18) einen ersten Abschnitt (74a), der axial zwischen dem Kamerakörper und dem Kurzwellen-Infrarotsensormodul angeordnet ist, wenn das Kurzwellen-Infrarotsensormodul innerhalb der Aufnahmevorrichtung aufgenommen ist, und einen zweiten Abschnitt (74b) beinhaltet, der axial zwischen dem Kurzwellen-Infrarotsensormodul und der Kameralinse angeordnet ist, wenn das Kurzwellen-Infrarotsensormodul innerhalb der Aufnahmevorrichtung aufgenommen ist, und wobei die Aufnahmevorrichtung (18) einen Deckel (70) beinhaltet, der an dem ersten Abschnitt (74a) und dem zweiten Abschnitt (74b) fixiert ist, um das Kurzwellen-Infrarotsensormodul (32) innerhalb der Aufnahmevorrichtung (18) zu fixieren.

2. Kamerabaugruppe (10) nach Anspruch 1, ferner umfassend eine Anzeige (40), um ein Bild anzuzeigen, das von dem Kurzwellen-Infrarotsensormodul empfangen wird.

3. Kamerabaugruppe (10) nach Anspruch 2, wobei der Kamerakörper (14) die Anzeige (48) umfasst.

4. Kamerabaugruppe (10) nach Anspruch 3, wobei die Anzeige (48) eine erste Anzeige ist und das Kurzwellen-Infrarotsensormodul eine zweite Anzeige (40) umfasst, um ein Bild anzuzeigen, das von dem Kurzwellen-Infrarotsensormodul (32) empfangen wird.

5. Kamerabaugruppe (10) nach den Ansprüchen 1-4, ferner umfassend eine Relaisoptik (44) innerhalb des Kurzwellen-Infrarotsensormoduls.

6. Kamerabaugruppe nach den Ansprüchen 1-5, wobei das Kurzwellen-Infrarotsensormodul (32) mit dem Kamerakörper (14) und der Kameralinse (22) über die Aufnahmevorrichtung (18) kommuniziert.

7. Kamerabaugruppe nach den Ansprüchen 1-6, wobei der Kamerakörper (14) und die Kameralinse (22) handelsübliche Standardkomponenten sind.

8. Verfahren der Bildgebung mit einem Kurzwellen-Infrarotsensormodul durch eine Kamerabaugruppe nach den Ansprüchen 1 bis 7, wobei das Verfahren Folgendes umfasst:
Kommunizieren von Signalen von dem Kamerakörper (14) über die Aufnahmevorrichtung (18), um die Kameralinse (22) zu steuern;
selektives Aufnehmen des Kurzwellen-Infrarotsensormoduls (32) innerhalb der Aufnahmevorrichtung (18) und Fixieren des Deckels (70) an dem ersten Abschnitt (74a) und an dem zweiten Abschnitt (74b) innerhalb der Aufnahmevorrichtung (18);
selektives Austauschen des Kurzwellen-Infrarotsensormoduls (32) innerhalb der Aufnahmevorrichtung (18) durch eine andere Art von Bildgebungsmodul.

9. Verfahren nach Anspruch 8, ferner umfassend das Anzeigen eines Bildes des Kurzwellen-Infrarotsensormoduls auf dem Kurzwellen-Infrarotsensormodul (32).

10. Verfahren nach den Ansprüchen 8 oder 9, ferner umfassend das Anzeigen eines Bildes von dem Kurzwellen-Infrarotsensormodul (32) auf dem Kamerakörper (14).

11. Verfahren nach den Ansprüchen 8-10, wobei der Kamerakörper (14) und die Kameralinse (22) handelsübliche Standardkomponenten sind.

## Revendications

1. Ensemble caméra (10) comprenant :
un corps de caméra (14) ;
un objectif de caméra (22) ;
un socle (18) qui communique des signaux entre le corps de caméra (14) et l'objectif de caméra (22), dans lequel le socle (18) comporte une monture à baïonnette pour recevoir sélectivement des modules ;
un module de capteur infrarouge à ondes courtes (32) reçu sélectivement à l'intérieur du socle (18), et
dans lequel le socle (18) comporte une première partie (74a) positionnée axialement entre le corps de caméra et le module de capteur infrarouge à ondes courtes lorsque le module de capteur infrarouge à ondes courtes est reçu à l'intérieur du socle, et une seconde partie (74b) positionnée axialement entre le module de capteur infrarouge à ondes courtes et l'objectif de caméra lorsque le module de capteur infrarouge à ondes courtes est reçu à l'intérieur du socle, et dans lequel le socle (18) comporte un couvercle (70) qui est fixé à la première partie (74a) et à la seconde partie (74b) pour fixer le module de capteur infrarouge à ondes courtes (32) à l'intérieur du socle (18) .

2. Ensemble caméra (10) selon la revendication 1, comprenant en outre un affichage (40) pour afficher une image reçue par le module de capteur infrarouge à ondes courtes.

3. Ensemble caméra (10) selon la revendication 2, dans lequel le corps de caméra (14) comprend l'affichage (48).

4. Ensemble caméra (10) selon la revendication 3, dans lequel l'affichage (48) est un premier affichage, et le module de capteur infrarouge à ondes courtes comprend un second affichage (40) pour afficher une image reçue par le module de capteur infrarouge à ondes courtes (32) .

5. Ensemble caméra (10) selon les revendications 1 à 4, comprenant en outre une optique de relais (44) à l'intérieur du module de capteur infrarouge à ondes courtes.

6. Ensemble caméra selon les revendications 1 à 5, dans lequel le module de capteur infrarouge à ondes courtes (32) communique avec le corps de caméra (14) et l'objectif de caméra (22) à travers le socle (18).

7. Ensemble caméra selon les revendications 1 à 6, dans lequel le corps de caméra (14) et l'objectif de caméra (22) sont des composants disponibles dans le commerce.

8. Procédé d'imagerie de module de capteur infrarouge à ondes courtes par un ensemble caméra selon les revendications 1 à 7, le procédé comprenant :
la communication des signaux provenant du corps de caméra (14) à travers le socle (18) pour commander l'objectif de caméra (22) ;
la réception sélective du module de capteur infrarouge à ondes courtes (32) à l'intérieur du socle (18) et la fixation du couvercle (70) à la première partie (74a) et à la seconde partie (74b) à l'intérieur du socle (18) ;
le remplacement sélectif du module de capteur infrarouge à ondes courtes (32) à l'intérieur du socle (18) par un autre type de module d'imagerie.

9. Procédé selon la revendication 8, comprenant en outre l'affichage d'une image de capteur infrarouge à ondes courtes sur le module de capteur infrarouge à ondes courtes (32).

10. Procédé selon les revendications 8 ou 9, comprenant en outre l'affichage d'une image provenant du module de capteur infrarouge à ondes courtes (32) sur le corps de caméra (14).

11. Procédé selon les revendications 8 à 10, dans lequel le corps de caméra (14) et l'objectif de caméra (22) sont des composants disponibles dans le commerce.
